# FASCICULE DE BREVET EUROPEEN

(11) **EP 4 228 905 B1**
(45) Date de publication et mention de la délivrance du brevet: **25.09.2024**
(21) Numéro de dépôt: 21805572.1
(22) Date de dépôt: 15.10.2021
(51) Int. Cl.: B60C 1/00, B60C 11/00

(54) **PNEUMATIQUE COMPORTANT UNE BANDE DE ROULEMENT CONSTITUEE DE PLUSIEURS MELANGES ELASTOMERIQUES**
REIFEN MIT EINER LAUFFLÄCHE AUS MEHREREN ELASTOMERVERBINDUNGEN
TYRE HAVING A TREAD MADE UP OF MULTIPLE ELASTOMERIC COMPOUNDS

(30) Priorité: 19.10.2020 FR 2010699
(43) Date de publication de la demande: 23.08.2023
(73) Titulaire: COMPAGNIE GENERALE DES ETABLISSEMENTS MICHELIN, 63000 Clermont-Ferrand (FR)
(72) Inventeur: HEBERT, Stéphane, 63040 CLERMONT-FERRAND Cedex 9 (FR); FERRAND, Thomas, 63040 CLERMONT-FERRAND Cedex 9 (FR); COSTE, Nathalie, 63040 CLERMONT-FERRAND Cedex 9 (FR); MANSUY, Philippe, 63040 CLERMONT-FERRAND Cedex 9 (FR)
(74) Mandataire: M.F.P. Michelin
(86) Numéro de dépôt international: PCT/FR2021/051797
(87) Numéro de publication internationale: WO 2022/084607

(56) Documents cités:
- EP-A2- 1 188 584
- WO-A1-2014/005929
- WO-A1-2018/002488
- FR-A1- 2 952 855
- JP-A- 2001 206 012
- JP-A- 2009 255 747
- JP-A- 2012 188 040
- US-A1- 2012 132 331

## Description

La présente invention concerne un pneumatique, à armature de carcasse radiale et plus particulièrement un pneumatique destiné à équiper des véhicules portant de lourdes charges, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

La direction circonférentielle du pneumatique, ou direction longitudinale, est la direction correspondant à la périphérie du pneumatique et définie par la direction de roulement du pneumatique.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

La direction transversale ou axiale du pneumatique est parallèle à l'axe de rotation du pneumatique. Une distance axiale est mesurée selon la direction axiale. L'expression « axialement intérieur à, respectivement axialement extérieur à » signifie « dont la distance axiale mesurée depuis le plan équatorial est inférieure à, respectivement supérieure à ».

La direction radiale est une direction coupant l'axe de rotation du pneumatique et perpendiculaire à celui-ci. Une distance radiale est mesurée selon la direction radiale. L'expression « radialement intérieur à, respectivement radialement extérieur à » signifie « dont la distance radiale mesurée depuis l'axe de rotation du pneumatique est inférieure à, respectivement supérieure à ».

Radialement à l'extérieur de l'armature de sommet, on trouve la bande de roulement habituellement constituée de matériaux polymériques destinés à venir au contact du sol dans l'aire de contact entre le sol et le pneumatique.

Il est connu de pourvoir la bande de roulement, c'est-à-dire la partie du pneumatique destinée à venir en contact avec le sol lors du roulage et à s'user lors du roulage, d'une sculpture formée d'éléments en relief délimités par des découpures telles que des rainures, qu'elles soient d'orientation circonférentielle, transversale ou oblique. L'objectif d'une telle sculpture est de conférer à la bande de roulement de bonnes performances en roulage sur chaussée sèche et sur chaussée revêtue d'eau notamment par temps de pluie.

Pour améliorer les performances des bandes de roulement sans toutefois trop abaisser les rigidités de cisaillement desdites bandes, il est connu de former sur la surface de roulement une pluralité d'arêtes orientées transversalement ou en oblique afin de couper la pellicule d'eau sur une chaussée pour assurer un bon contact entre la bande de roulement et la chaussée. Un moyen d'obtention de telles arêtes consiste à pourvoir la bande d'une pluralité de découpures, ces découpures ayant la forme de rainures ou la forme d'incisions. On distingue, dans la présente demande, les incisions des rainures en ce que les incisions ont une largeur appropriée pour permettre pendant le roulage un contact au moins partiel entre les parois en vis-à-vis délimitant ces incisions et notamment au cours du passage dans le contact avec le sol, ce qui ne saurait être le cas pour les rainures dans les conditions normales d'usage du pneu.

Au sens de l'invention, une découpure d'orientation longitudinale est une découpure dont le plan moyen d'au moins une partie des parois de ladite découpure forme un angle avec un plan longitudinal inférieur à 10°. Cet angle formé avec un plan longitudinal peut être orienté dans un sens ou dans l'autre par rapport audit plan longitudinal. Une découpure d'orientation longitudinale peut encore être une découpure dont les parois ondulent ou zigzaguent autour d'un plan moyen tel qu'il vient d'être décrit.

Au sens de l'invention, une découpure d'orientation transversale est une découpure dont le plan moyen d'au moins une partie des parois de ladite découpure forme un angle avec un plan radial inférieur à 35°. Cet angle formé avec un plan radial peut être orienté dans un sens ou dans l'autre par rapport audit plan radial. Une découpure d'orientation transversale peut encore être une découpure dont les parois ondulent ou zigzaguent autour d'un plan moyen tel qu'il vient d'être décrit.

Au sens de l'invention, une découpure d'orientation oblique est une découpure dont le plan moyen d'au moins une partie des parois de ladite découpure forme un angle avec un plan radial compris entre 35° et 80°. Cet angle formé avec un plan radial peut être orienté dans un sens ou dans l'autre par rapport audit plan radial. Une découpure d'orientation oblique peut encore être une découpure dont les parois ondulent ou zigzaguent autour d'un plan moyen tel qu'il vient d'être décrit.

Les documents JP 2009 257747 A, JP 2001 206012 A et Ep 1 188 584 A2 décrivent des pneumatiques dont la bande de roulement est constituées de plusieurs mélanges élastomériques.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet un accroissement du nombre de kilomètres parcourus, l'usure du pneumatique étant moindre.

Afin d'augmenter encore la durée de vie des pneumatiques, il est usuel de choisir des matériaux polymériques constitutifs de la bande de roulement présentant des propriétés de résistance en usure améliorées. De tels matériaux pénalisant le plus souvent les propriétés hystérétiques, il est encore connu de réaliser la bande de roulement d'un pneumatique par une superposition radiale de deux matériaux différents pour obtenir un compromis des propriétés d'usure et d'hystérèse satisfaisant pour les applications envisagées.

De tels pneumatiques sont par exemple décrits dans le document US 6,247,512. Ce document décrit la superposition de deux couches de matériaux pour former la bande de roulement, le matériau externe venant au contact du sol étant notamment plus performant en termes d'usure alors que le matériau interne présente des propriétés hystérétiques permettant de limiter les montées en température du pneumatique dans la zone du sommet.

Il est par ailleurs apparu que certains pneumatiques qui présentent des performances en termes de résistance au roulement améliorées voient leurs performances en termes d'usure détériorées avec l'apparition d'irrégularités d'usure au point que certains pneumatiques peuvent être retirés du véhicule qu'ils équipent pour être remplacés tant l'inconfort qu'ils procurent au conducteur devient important.

Les inventeurs se sont donnés pour mission d'être en mesure de fournir des pneumatiques autorisant une distance de roulage toujours plus importante avec des propriétés de résistance au roulement satisfaisantes en conservant des propriétés d'usure satisfaisantes, sans voir apparaître d'usure irrégulière rendant la conduite délicate.

Ce but a été atteint selon l'invention par un pneumatique, à armature de carcasse radiale, comprenant une armature de sommet, elle-même coiffée radialement d'une bande de roulement réunie à deux bourrelets par l'intermédiaire de deux flancs, ladite bande de roulement comportant des rainures formant une sculpture, présentant une hauteur entre le fond de la sculpture et la surface de roulement, et ladite bande de roulement étant constituée au moins localement d'au moins trois couches de mélanges élastomériques radialement superposées sur la hauteur de sculpture de la bande de roulement, une première couche formant la partie radialement extérieure de la bande de roulement étant constituée d'un premier mélange élastomérique présentant une valeur maximale de tan(δ), notée tan(δ)max, strictement inférieure à 0.150, une deuxième couche de mélange élastomérique radialement plus intérieure étant constituée d'un deuxième mélange élastomérique, au moins une troisième couche de mélange élastomérique, radialement au contact de deux couches constituées dudit premier mélange élastomérique et dudit deuxième mélange élastomérique, étant constituée d'un troisième mélange élastomérique présentant une dureté Vickers au moins 12 fois supérieure à celle du premier mélange élastomérique et au moins 12 fois supérieure à celle du deuxième mélange élastomérique, dans une coupe méridienne du pneumatique, dans une zone définie entre les extrémités axialement les plus extérieures de la troisième couche, le rapport de la surface du troisième mélange élastomérique sur la somme des surfaces desdites au moins trois couches de mélange élastomérique étant compris entre 10% et 30% et, dans une coupe méridienne du pneumatique, le barycentre du troisième mélange élastomérique étant radialement situé entre 30% et 70% de la hauteur de sculpture de la bande de roulement depuis le fond de la sculpture.

Au sens de l'invention, la hauteur de sculpture dans une coupe méridienne du pneumatique est la distance mesurée entre la surface radialement extérieure de la bande de roulement, formant la surface de contact avec le sol, et la surface parallèle extrapolée à partir des fonds de sculpture, ladite distance étant mesurée selon une direction normale à la surface radialement extérieure de la bande de roulement. Les fonds de sculpture sont les points radialement les plus intérieurs des zones en creux sur la bande de roulement.

Les mesures de surfaces et la détermination du barycentre sont réalisées sur pneumatique neuf.

Les mesures de surfaces sont effectuées sur une coupe méridienne du pneumatique dans une zone définie entre les extrémités axialement les plus extérieures de la troisième couche, c'est-à-dire dans une zone définie par les deux droites radiales délimitant axialement la présence de la troisième couche.

La mesure de dureté Vickers est réalisée avec un micro-duromètre Fisherscope HM 2000 équipé d'un indenteur Vickers (pyramide à base carrée et angle au sommet de 136°). La consigne de charge appliquée est de 25 millinewton, le temps de charge et décharge est de 20 secondes, le temps de maintien de la consigne de charge est de 5 secondes et le coefficient de Poisson est fixé à 0,5. L'échantillon mesuré est prélevé sur le pneumatique et correspond à une tranche de la bande de roulement prélevée selon la direction radiale. L'échantillon est enrobé dans une résine pour faire apparaître en surface à tester un profil selon la direction de la bande de roulement, le tout étant poli mécaniquement pour que la profondeur d'indentation soit supérieure à vingt fois la rugosité arithmétique de surface. La distance entre deux indentations successives est de 100 micromètres. La dureté Vickers est exprimée en MPa.

Selon un mode de réalisation préféré de l'invention, la troisième couche de mélange polymérique est présente sur au moins 40% de la largeur axiale de la bande de roulement.

De préférence selon l'invention, le troisième mélange élastomérique présente une dureté Vickers supérieure à 72 MPa.

Avantageusement selon l'invention, le troisième mélange élastomérique présente une valeur du module complexe de cisaillement dynamique G* mesurée à 5 % d'élongation au moins 5 fois supérieure à celle du premier mélange élastomérique et au moins 5 fois supérieure à celle du deuxième mélange élastomérique.

Avantageusement encore selon l'invention, le troisième mélange élastomérique présente une valeur du module complexe de cisaillement dynamique G* supérieure à 30 MPa à 5 % de déformation.

De préférence également selon l'invention, toujours pour limiter l'usure irrégulière, le troisième mélange élastomérique présente une valeur maximale de tan(δ), notée tan(δ)max, strictement supérieure à 0.150 et de préférence supérieure à 0.200.

Selon une variante de réalisation de l'invention, le deuxième mélange élastomérique est identique au premier mélange élastomérique.

Le module complexe de cisaillement dynamique G* et le facteur de perte tan(δ) sont des propriétés dynamiques de la couche de mélange caoutchouteux. Ils sont mesurés sur un viscoanalyseur (Metravib VA4000), selon la norme ASTM D 5992-96. On enregistre la réponse d'une éprouvette constituée de deux pastilles cylindriques de 2 mm d'épaisseur chacune et d'un centimètre de diamètre (l'éprouvette est réalisée à partir de prélèvements sur pneumatique réalisés à mi-hauteur de la couche concernée au plus près de la zone du plan équatorial dans une zone d'épaisseur suffisante pour constituer l'éprouvette), soumis à une sollicitation sinusoïdale en cisaillement simple alterné, à la fréquence de 10Hz, à une température de 60°C. On effectue un balayage en amplitude de déformation de 0,1 à 50% crête-crête (cycle aller), puis de 50% à 1% crête-crête (cycle retour). Les résultats exploités sont le module complexe de cisaillement dynamique (G*) et le facteur de perte tan(δ). Pour le cycle aller, on indique la valeur maximale de tan(δ) observée, notée tan(δ)ₘₐₓ.

La résistance au roulement est la résistance qui apparaît lorsque le pneumatique roule et monte en température. Elle est ainsi représentée par les pertes hystérétiques liées à la déformation du pneumatique durant une révolution. Les valeurs de tan(δ) des matériaux utilisés sont mesurées à 10Hz entre 30 et 100°C pour intégrer l'effet des différentes fréquences de déformation induites par la révolution du pneumatique. La valeur de tan(δ) à 60°C correspond ainsi à un indicateur de la part du mélange testé dans la résistance au roulement du pneumatique en roulage.

Les différentes mesures sont effectuées sur des pneumatiques neufs, n'ayant encore effectué aucun roulage.

Les inventeurs ont su mettre en évidence que la combinaison d'un premier mélange élastomérique présentant une valeur maximale de tan(δ), notée tan(δ)max, strictement inférieure à 0.150, formant la partie radialement la plus extérieure de la bande de roulement et venant au contact du sol, d'un deuxième mélange élastomérique radialement intérieur au troisième mélange élastomérique, éventuellement identique au premier mélange élastomérique, et dudit troisième mélange élastomérique présentant une dureté Vickers au moins 12 fois supérieure à celle du premier mélange élastomérique et au moins 12 fois supérieure à celle du deuxième mélange élastomérique, et de préférence supérieur à 72 MPa, et tel que décrit précédemment conduit à un compromis satisfaisant entre la performance d'usure, notamment en termes d'irrégularités d'usure, et les propriétés de résistance au roulement du pneumatique.

En effet, le premier mélange élastomérique constituant la partie radialement extérieure de la bande de roulement présentant une valeur maximale de tan(δ), notée tan(δ)max, strictement inférieure à 0.150, apporte une performance en usure satisfaisante mais par contre conduit de manière connue à une usure irrégulière. Il est en effet connu qu'une bande de roulement constituée d'un mélange élastomérique présentant une valeur maximale de tan(δ), notée tan(δ)max, strictement inférieure à 0.150 conduise à des formes d'usure irrégulière, d'autant plus prononcées que le nombre de découpures présentes sur la bande de roulement est important. De telles formes d'usure irrégulière s'accentuent lorsque l'usure augmente. Elles conduisent généralement à devoir changer le pneumatique celui-ci devenant impropre à son utilisation du fait des vibrations que les formes d'usure irrégulière génèrent.

Les inventeurs ont su mettre en évidence que la présence du troisième mélange élastomérique associé à ses propriétés de rigidité et son positionnement permet de venir atténuer cette usure irrégulière. Les inventeurs pensent interpréter ce résultat par l'effet de la troisième couche qui intervient au contact du sol sensiblement autour de la période de mi-usure de la bande de roulement et qui, du fait de sa rigidité, va permettre d'atténuer l'usure irrégulière jusqu'à ce que l'usure conduise à la deuxième couche. Une telle configuration selon l'invention autorise une usure de la bande de roulement dont les profils d'usure irrégulière demeurent acceptables tout au long de l'utilisation du pneumatique correspondant à une usure complète de la bande de roulement telle qu'initialement prévue par la conception même du pneumatique.

Selon une variante préférée de l'invention, le rapport de la surface du troisième mélange élastomérique sur la somme des surfaces desdites au moins trois couches de mélange élastomérique est supérieur à 15 % et avantageusement inférieur à 25 %.

Selon un premier mode de réalisation de l'invention, la troisième couche est disposée sensiblement parallèlement à la surface radialement extérieure de la bande de roulement.

Selon un autre mode de réalisation de l'invention, dans une coupe méridienne du pneumatique, le positionnement radial de ladite au moins une troisième couche varie selon la direction axiale pour limiter au maximum les risques pour cette couche de former la surface de contact au cours de la vie du pneumatique, ou tout au moins pour que le troisième mélange n'apparaisse au cours de l'usure de la bande de roulement que localement en surface de la bande de roulement.

Par exemple, la sculpture de la bande de roulement étant constituée de plusieurs ribs séparés par des rainures circonférentielles, le troisième mélange conforme à l'invention peut n'être présent que dans certains ribs. Chacun des ribs comportant le troisième mélange peut comporter une ou plusieurs couches du troisième mélange.

La sculpture de la bande de roulement étant constituée de plusieurs ribs séparés par des rainures circonférentielles, la disposition géométrique de ladite au moins une troisième couche de mélange élastomérique peut varier d'un rib à l'autre.

Selon ces modes de réalisation, la bande de roulement est avantageusement réalisée avant cuisson par empilement de couches de mélanges élastomériques radialement superposées et/ou axialement juxtaposées selon les formes et ou localisations souhaitées pour les différents mélanges. Le profil de chacune des couches empilées est également choisi en fonction de la configuration souhaitée.

Selon une variante de réalisation de l'invention, la bande de roulement comporte une couche supplémentaire radialement la plus intérieure et constituée d'un quatrième mélange élastomérique présentant une valeur maximale de tan(δ), notée tan(δ)max, strictement inférieure à 0.100. Une telle variante de réalisation peut permettre de diminuer encore les propriétés hystérétiques du pneumatique, ladite quatrième couche étant avantageusement prévue pour ne jamais venir au contact du sol.

Selon un mode de réalisation de l'invention, l'armature de sommet du pneumatique est formée d'au moins deux couches de sommet de travail d'éléments de renforcement, de préférence inextensibles, croisés d'une couche à l'autre en faisant avec la direction circonférentielle des angles compris entre 10° et 45°.

Selon d'autres modes de réalisation de l'invention, l'armature de sommet comporte encore au moins une couche d'éléments de renforcement circonférentiels.

Une réalisation de l'invention prévoit encore que l'armature de sommet est complétée radialement à l'extérieur par au moins une couche supplémentaire, dite de protection, de préférence constituée d'éléments de renforcement dits élastiques, orientés par rapport à la direction circonférentielle avec un angle compris entre 10° et 45° et de même sens que l'angle formé par les éléments de renforcement de la couche de travail qui lui est radialement adjacente.

Selon l'un quelconque des modes de réalisation de l'invention évoqués précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

D'autres détails et caractéristiques avantageux de l'invention ressortiront ci-après de la description d'exemples de réalisation de l'invention en référence aux figures 1 à 3 qui représentent :
- figure 1, une vue méridienne d'un schéma d'une partie d'un pneumatique selon un premier mode de réalisation de l'invention,
- figure 2, une vue méridienne d'un schéma d'une partie d'un pneumatique selon un deuxième mode de réalisation de l'invention,
- figure 3, une vue méridienne d'un schéma d'une partie d'un pneumatique selon un troisième mode de réalisation de l'invention.

Les figures ne sont pas représentées à l'échelle pour en simplifier la compréhension.

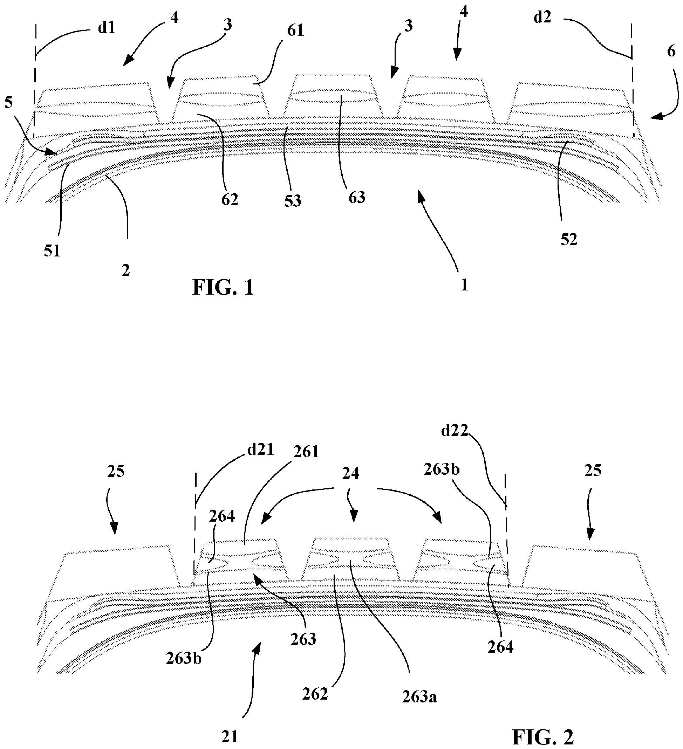

Sur la figure 1, le pneumatique 1, de dimension 315/70 R 22.5, comprend une armature de carcasse radiale 2 ancrée dans deux bourrelets, autour de tringles, non représentées sur les figures. L'armature de carcasse 2 est formée d'une seule couche de câbles métalliques. L'armature de carcasse 2 est frettée par une armature de sommet 5, elle-même coiffée d'une bande de roulement 6. La bande de roulement comporte quatre rainures 3 formant cinq ribs 4.

Les zones basses et bourrelets du pneumatique 1 ne sont notamment pas représentés sur les figures.

Sur la figure 1, l'armature de sommet 5 est formée radialement de l'intérieur à l'extérieur :
- d'une première couche de travail 51 formée de câbles métalliques inextensibles 11.35 non frettés, continus sur toute la largeur de la nappe, orientés d'un angle égal à 18°,
- d'une seconde couche de travail 52 formée de câbles métalliques inextensibles 11.35 non frettés, continus sur toute la largeur de la nappe, orientés d'un angle égal à 26° et croisés aux câbles métalliques de la première couche de travail,
- d'une couche de protection 53 formée de câbles métalliques élastiques 6.35 non frettés, continus sur toute la largeur de la nappe, orientés d'un angle égal à 26° dans le même sens que les câbles métalliques de la couche de travail 52.

Conformément à l'invention, la bande de roulement 6 est constituée d'une première couche 61 radialement extérieure qui vient au contact du sol et d'une couche 62 radialement intérieure.

La couche 61 est constituée du premier mélange élastomérique présentant une dureté Vickers égale à 6 MPa.

Le premier mélange présente un module G* égal à 2 MPa à 5 % de déformation.

Le premier mélange présente une valeur maximale de tan(δ), notée tan(δ)max, égale à 0.144.

La couche 62, radialement la plus intérieure, est constituée du deuxième mélange élastomérique.

Selon ce mode de réalisation, la couche 62 est constituée d'un deuxième mélange identique au premier mélange.

Sur cette figure 1, on voit encore la couche 63 constituée du troisième mélange présentant une dureté Vickers égale à 100 MPa.

Le troisième mélange présente un module G* égal à 34 MPa à 5 % de déformation.

Le troisième mélange présente une valeur maximale de tan(δ), notée tan(δ)max, égale à 0.260.

Le ratio de la surface de la troisième couche 63 sur la somme des surfaces des trois couches 61, 62 et 63 est égal à 23 % sur l'ensemble des ribs.

Les surfaces respectives des couches 61, 62 et 63 sont mesurées entre les deux droites d1 et d2 formant les droites radiales passant par les extrémités axialement les plus extérieures de la couche 63.

Le barycentre de la troisième couche 63 est positionné à 50% de la hauteur de sculpture de la bande de roulement depuis le fond de la sculpture.

La figure 2, conformément à une variante de réalisation de l'invention, représente un pneumatique 21 semblable à celui de la figure 1 et qui en diffère par le profil de la troisième couche 263 dans un plan méridien. Dans chacun des trois ribs centraux 24, la troisième couche 263 est constituée d'une partie centrale relativement épaisse 263a prolongée axialement de part et d'autre dans ses parties radialement inférieure et supérieure par des couches amincies 263b séparées l'une de l'autre par une couche 264 constituée du premier mélange. Le positionnement radial de la couche 263 peut varier selon la direction axiale différemment d'un rib à l'autre. Dans les ribs 25 axialement les plus extérieurs, le troisième mélange n'est pas présent. Cette réalisation particulière peut permettre dans certaines circonstances de moins perturber le profil d'usure du pneumatique au cours de l'usage.

Le ratio de la surface de la troisième couche 263 sur la somme des surfaces des trois couches 261, 262 et 263 est égal à 23 % dans les trois ribs centraux 24.

Les surfaces respectives des couches 261, 262 et 263 sont mesurées entre les deux droites d21 et d22 formant les droites radiales passant par les extrémités axialement les plus extérieures de la couche 263.

Le barycentre de la troisième couche 263 est positionné à 51% de la hauteur de sculpture de la bande de roulement.

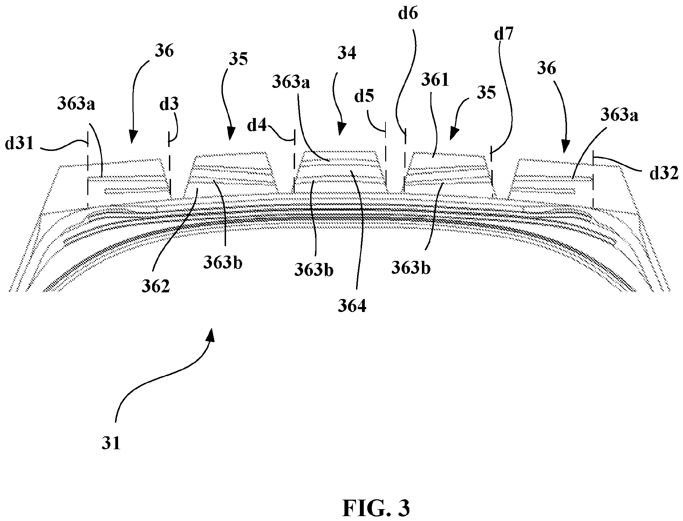

La figure 3 illustre une troisième variante de réalisation de l'invention. Le pneumatique 31 est semblable à celui de la figure 1 et en diffère par la présence de deux couches 363a, 363b radialement superposées dans chacun des ribs 34, 35, 36 l'orientation des couches 363a, 363b variant d'un rib 34, 35, 36 à l'autre. Les deux couches 363a, 363b sont donc radialement intercalées entre trois couches 361, 362, 364, toutes constituées du premier mélange. Les variations du positionnement radial de la couche 363 selon la direction axiale sont optimisées pour améliorer les performances d'adhérence et d'usure. Les parties axialement extérieures des couches 363 sont omises dans la partie axialement la plus extérieure des ribs 36 axialement les plus extérieurs pour ne pas perturber le profil d'usure des épaules du pneumatique lors des roulages.

Le ratio de la surface des troisièmes couche 363a, 363b sur la somme des surfaces de l'ensemble des couches 361, 362, 363a, 363b et 364 est égal à 25 % dans le rib central 34.

Les surfaces respectives des couches 361, 362, 363a, 363b et 364 sont mesurées entre les deux droites d4 et d5 formant les droites radiales passant par les extrémités axialement les plus extérieures des couche 363a, 363b dans le rib central 34.

Le ratio de la surface des troisièmes couches 363a, 363b sur la somme des surfaces de l'ensemble des couches 361, 362, 363a, 363b et 364 est égal à 20 % dans les deux ribs intermédiaires 35.

Les surfaces respectives des couches 361, 362, 363a, 363b et 364 sont mesurées entre les deux droites d6 et d7 formant les droites radiales passant par les extrémités axialement les plus extérieures des couche 363a, 363b dans les ribs intermédiaires 35.

Le ratio de la surface des troisièmes couches 363a, 363b sur la somme des surfaces de l'ensemble des couches 361, 362, 363a, 363b et 364 est égal à 11 % dans les deux ribs 36 axialement les plus extérieurs.

Les surfaces respectives des couches 361, 362, 363a, 363b et 364 sont mesurées entre les deux droites d31 et d3 formant les droites radiales passant par les extrémités axialement les plus extérieures des couche 363a, 363b dans les deux ribs 36 axialement les plus extérieurs.

Le ratio de la surface des troisièmes couches 363a, 363b sur la somme des surfaces de l'ensemble des couches 361, 362, 363a, 363b et 364 est égal à 16 % sur l'ensemble des ribs 34, 35, 36.

Les surfaces respectives des couches 361, 362, 363a, 363b et 364 sont mesurées entre les deux droites d31 et d32 formant les droites radiales passant par les extrémités axialement les plus extérieures des couche 363a, 363b dans l'ensemble des ribs 34, 35, 36.

Le barycentre des troisièmes couches 363a, 363b est positionné à 46% de la hauteur de sculpture de la bande de roulement depuis le fond de la sculpture.

Des pneumatiques ont été réalisés sur la base des deux mélanges élastomériques décrits ci-dessous avec certaines de leurs propriétés.

| | Mélange A | Mélange B |
|---|---|---|
| NR | 80 | 100 |
| BR | 20 | - |
| N234 | 48 | - |
| N326 | - | 75 |
| Résine FORMOPHENOL | - | 12 |
| HEXAMETHYLENE TETRAMINE | - | 8.5 |
| 6PPD - 1.3DIMETHYL BUTYL PHENYL PARAPHENYLENE-DIAMINE | 3 | 2 |
| ACIDE STEARIQUE | - | 0.6 |
| ZNO | 3 | 8.5 |
| SOUFRE | 1.5 | 5.3 |
| Accélérateur (CBS) | 0.9 | 1.05 |
| Dureté Vickers (MPa) | 6 | 100 |
| G*5%_{cc}/60°C/10Hz (MPa) | 2 | 34 |
| tan(δ)ₘₐₓ | 0.144 | 0.260 |

Les valeurs des constituants sont exprimées en pce (parties en poids pour cent parties d'élastomères).

Un premier pneumatique de référence R est réalisé selon une configuration correspondant à des réalisations usuelles ne comportant pas de couche 63. La bande de roulement est réalisée avec le mélange A.

Un premier pneumatique T₁ conforme à l'invention et plus particulièrement au cas de la figure 1 associe, pour former la bande de roulement, le mélange A qui forme les couche 61 et 62, le mélange B étant utilisé pour constituer la couche 63.

Un deuxième pneumatique T₂ réalisé conformément à l'invention s'apparente à celui de la figure 2. Le premier mélange correspond au mélange A et la couche 263 est constituée du mélange B.

Un troisième pneumatique T₃ réalisé conformément à l'invention s'apparente à celui de la figure 3. Le premier mélange correspond au mélange A et les couches 363 sont constituées du mélange B.

Des essais en roulage ont été réalisés avec les différents pneumatiques selon l'invention T1, T2 et T3 et avec des pneumatiques de référence R. Les essais ont été réalisés avec des pneumatiques montés sur les essieux directeurs des véhicules. Chacun des pneumatiques est monté sur deux véhicules identiques pilotés par des pilotes différents de sorte que chacun teste l'ensemble des pneumatiques. Les roulages se font sur circuit constitué de 2 lignes droites de 1020 m, et de deux virages relevés de rayon moyen 636 m. Le dévers de ces virages est construit de telle manière que, pour une vitesse de 105 km/h, en tout point du virage, la gravité génère une accélération centripète de même valeur que l'accélération centrifuge liée à la vitesse du véhicule, permettant ainsi au véhicule de ne subir aucune accélération transversale, et donc aux pneumatiques de ne subir aucun effort transversal. La vitesse de 105 km/h est donc la vitesse neutre de ce circuit. Ce type de test sous très faible sollicitation latérale a la propriété d'exacerber les phénomènes d'usure irrégulière qui sont dès lors visibles à mi-usure du pneumatique.

Les classements des pneumatiques effectués par les pilotes en termes de confort sont identiques. Les pneumatiques T1, T2 et T3 sont classés en tête, les pneumatiques ayant été usés jusqu'au témoin d'usure. Le pneumatique T3 est considéré plus performant que les pneumatiques T1 et T2.

Concernant le pneumatique de référence, les deux pilotes ont fait le choix d'interrompre les roulages à des niveaux d'usure sensiblement équivalents, ceux-ci ne se sentant plus en sécurité du fait de l'inconfort et des vibrations ressenties dans le volant.

Des mesures de résistance au roulement ont également été effectuées sur chacun des pneumatiques dans des conditions de roulage identiques selon le Règlement n° 117 de la Commission économique pour l'Europe des Nations unies (CEE-ONU). Les résultats des mesures sont présentés dans le tableau suivant, une valeur de 100 étant attribuée au pneumatique R. Des valeurs inférieures à 100 expriment une performance en résistance au roulement supérieure.

| Pneumatique R | Pneumatique T₁ | Pneumatique T₂ | Pneumatique T₃ |
|---|---|---|---|
| 100 | 98 | 99 | 99 |

Ces valeurs mettent en évidence des performances en termes de résistance au roulement du pneumatique selon l'invention sensiblement équivalentes à celles du pneumatique de référence, voire améliorées.

## Revendications

1. Pneumatique (1), à armature de carcasse radiale (2), comprenant une armature de sommet (5), elle-même coiffée radialement d'une bande de roulement (6) réunie à deux bourrelets par l'intermédiaire de deux flancs, ladite bande de roulement (6) comportant des rainures formant une sculpture, présentant une hauteur entre le fond de la sculpture et la surface de roulement, ladite bande de roulement étant constituée au moins localement d'au moins trois couches (61, 62, 63) de mélanges élastomériques radialement superposées sur la hauteur de sculpture de la bande de roulement, **caractérisé en ce qu'**une première couche (61) formant la partie radialement extérieure de la bande de roulement est constituée d'un premier mélange élastomérique présentant une valeur maximale de tan(δ), notée tan(δ)max, mesurée selon la norme ASTM D 5992-96, à la fréquence de 10Hz, à une température de 60°C, strictement inférieure à 0.150, **en ce qu'**une deuxième couche (62) de mélange élastomérique radialement plus intérieure est constituée d'un deuxième mélange élastomérique, **en ce qu'**au moins une troisième couche (63) de mélange élastomérique radialement au contact de deux couches constituées dudit premier mélange élastomérique et/ou dudit deuxième mélange élastomérique est constituée d'un troisième mélange élastomérique présentant une dureté Vickers, mesurée avec un micro-duromètre selon les conditions définies dans la description, au moins 12 fois supérieure à celle du premier mélange élastomérique et au moins 12 fois supérieure à celle du deuxième mélange élastomérique, **en ce que,** dans une coupe méridienne du pneumatique, dans une zone définie entre les extrémités axialement les plus extérieures de la troisième couche, le rapport de la surface du troisième mélange élastomérique sur la somme des surfaces desdites au moins trois couches de mélange élastomérique est compris entre 10% et 30% et **en ce que,** dans une coupe méridienne du pneumatique, le barycentre du troisième mélange élastomérique est radialement situé entre 30% et 70% de la hauteur de sculpture de la bande de roulement depuis le fond de la sculpture.

2. Pneumatique (1) selon la revendication 1, **caractérisé en ce que** la troisième couche de mélange polymérique est présente sur au moins 40 % de la largeur axiale de la bande de roulement.

3. Pneumatique (1) selon la revendication 1 ou 2, **caractérisé en ce que** le troisième mélange élastomérique présente une dureté Vickers, mesurée avec un micro-duromètre selon les conditions définies dans la description, supérieure à 72 MPa.

4. Pneumatique (1) selon l'une des revendications 1 à 3, **caractérisé en ce que** le troisième mélange élastomérique présente un module complexe de cisaillement dynamique G*, mesuré selon la norme ASTM D 5992-96, à la fréquence de 10Hz, à une température de 60°C, à 5 % d'élongation, au moins 5 fois supérieur à celui du premier mélange élastomérique et au moins 5 fois supérieur à celui du deuxième mélange élastomérique.

5. Pneumatique (1) selon l'une des revendications précédentes, **caractérisé en ce que** le troisième mélange élastomérique présente un module complexe de cisaillement dynamique G*, mesuré selon la norme ASTM D 5992-96, à la fréquence de 10Hz, à une température de 60°C, supérieur à 30 MPa à 5 % d'élongation.

6. Pneumatique (1) selon l'une des revendications précédentes, **caractérisé en ce que** le troisième mélange élastomérique présente une valeur maximale de tan(δ), notée tan(δ)max, strictement supérieure à 0.150 et de préférence supérieure à 0.200.

7. Pneumatique (1) selon l'une des revendications précédentes, **caractérisé en ce que** le deuxième mélange élastomérique est identique au premier mélange élastomérique.

8. Pneumatique (1) selon l'une des revendications précédentes, **caractérisé en ce que** le rapport de la surface du troisième mélange élastomérique sur la somme des surfaces desdites au moins trois couches de mélange élastomérique est supérieur à 15 % et de préférence inférieur à 25 %.

9. Pneumatique (1) selon l'une des revendications précédentes, **caractérisé en ce que,** dans une coupe méridienne du pneumatique, ladite au moins une troisième couche est disposée sensiblement parallèlement à la surface extérieure de la bande de roulement.

10. Pneumatique (1) selon l'une des revendications 1 à 8, **caractérisé en ce que,** dans une coupe méridienne du pneumatique, le positionnement radial de ladite au moins une troisième couche varie selon la direction axiale.

## Patentansprüche

1. Reifen (1) mit Radialkarkassenverstärkung (2), umfassend eine Gürtelverstärkung (5), die wiederum radial von einem Laufstreifen (6) überdeckt wird, der über zwei Seitenwände mit zwei Wülsten verbunden ist, wobei der Laufstreifen (6) ein Profil bildende Rillen beinhaltet, die eine Höhe zwischen dem Boden des Profils und der Lauffläche aufweisen, wobei der Laufstreifen mindestens lokal aus mindestens drei Schichten (61, 62, 63) aus Elastomermischungen besteht, die über die Profilhöhe des Laufstreifens radial übereinander liegen, **dadurch gekennzeichnet, dass** eine den radial äußeren Teil des Laufstreifens bildende erste Schicht (61) aus einer ersten Elastomermischung besteht, die einen maximalen Wert von tan(δ), bezeichnet als tan(δ)max, gemessen nach der Norm ASTM D 5992-96, bei der Frequenz von 10 Hz, bei einer Temperatur von 60 °C, strikt kleiner als 0,150 aufweist, dass eine radial weiter innen liegende zweite Schicht (62) aus einer zweiten Elastomermischung besteht, dass mindestens eine dritte Schicht (63) aus Elastomermischung, die radial in Kontakt mit zwei aus der ersten Elastomermischung und/oder aus der zweiten Elastomermischung bestehenden Schichten in Kontakt ist, aus einer dritten Elastomermischung besteht, die eine mit einem Mikro-Härteprüfer nach den in der Beschreibung definierten Bedingungen gemessene Vickers-Härte aufweist, die mindestes 12 Mal höher als die der ersten Elastomermischung und mindestens 12 Mal höher als die der zweiten Elastomermischung ist, dass, in einem Meridianschnitt des Reifens, in einem definierten Bereich zwischen den axial äußersten Enden der dritten Schicht, das Verhältnis der Fläche der dritten Elastomermischung zu der Summe der Flächen der mindestens drei Schichten aus Elastomermischung zwischen 10 % und 30 % beträgt und dass, in einem Meridianschnitt des Reifens, der Schwerpunkt der dritten Elastomermischung radial zwischen 30 % und 70 % der Profilhöhe des Laufstreifens von dem Boden des Profils aus liegt.

2. Reifen (1) nach Anspruch 1, **dadurch gekennzeichnet, dass** die dritte Schicht aus Polymermischung über mindestens 40 % der axialen Breite des Laufstreifens vorhanden ist.

3. Reifen (1) nach Anspruch 1 oder 2, **dadurch gekennzeichnet, dass** die dritte Elastomermischung eine mit einem Mikro-Härteprüfer nach den in der Beschreibung definierten Bedingungen gemessene Vickers-Härte von mehr als 72 MPa aufweist.

4. Reifen (1) nach einem der Ansprüche 1 bis 3, **dadurch gekennzeichnet, dass** die dritte Elastomermischung einen komplexen dynamischen Schubmodul G*, gemessen nach der Norm ASTM D 5992-96, bei der Frequenz von 10 Hz, bei einer Temperatur von 60 °C, bei 5 % Dehnung aufweist, der mindestens 5 Mal größer als derjenige der ersten Elastomermischung und mindestens 5 Mal größer als derjenige der zweiten Elastomermischung ist.

5. Reifen (1) nach einem der vorhergehenden Ansprüche, **dadurch gekennzeichnet, dass** die dritte Elastomermischung einen komplexen dynamischen Schubmodul G*, gemessen nach der Norm ASTM D 5992-96, bei der Frequenz von 10 Hz, bei einer Temperatur von 60 °C, von mehr als 30 MPa bei 5 % Dehnung aufweist.

6. Reifen (1) nach einem der vorhergehenden Ansprüche, **dadurch gekennzeichnet, dass** die dritte Elastomermischung einen maximalen Wert von tan(δ), bezeichnet als tan(δ)max, strikt größer als 0,150 und bevorzugt größer als 0,200 aufweist.

7. Reifen (1) nach einem der vorhergehenden Ansprüche, **dadurch gekennzeichnet, dass** die zweite Elastomermischung identisch mit der ersten Elastomermischung ist.

8. Reifen (1) nach einem der vorhergehenden Ansprüche, **dadurch gekennzeichnet, dass** das Verhältnis der Fläche der dritten Elastomermischung zu der Summe der Flächen der mindestens drei Schichten aus Elastomermischung größer als 15 % und bevorzugt kleiner als 25 % ist.

9. Reifen (1) nach einem der vorhergehenden Ansprüche, **dadurch gekennzeichnet, dass**, in einem Meridianschnitt des Reifens, die mindestens eine dritte Schicht im Wesentlichen parallel zu der äußeren Fläche des Laufstreifens angeordnet ist.

10. Reifen (1) nach einem der Ansprüche 1 bis 8, **dadurch gekennzeichnet, dass**, in einem Meridianschnitt des Reifens, die radiale Positionierung der dritten Schicht entlang der axialen Richtung variiert.

## Claims

1. - Tyre (1) having a radial carcass reinforcement (2), comprising a crown reinforcement (5) which is itself capped radially by a tread (6) that is joined to two beads via two sidewalls, said tread (6) having grooves that form a tread pattern, having a height between the bottom of the tread pattern and the tread surface, said tread being made up, at least locally, of at least three layers (61, 62, 63) of elastomeric compounds that are radially superposed over the tread pattern height of the tread, **characterized in that** a first layer (61) forming the radially outer portion of the tread is made up of a first elastomeric compound having a maximum value of tan(δ), denoted tan(δ)max, measured according to Standard ASTM D 5992-96, at a frequency of 10 Hz, at a temperature of 60°C, of strictly less than 0.150, **in that** a second layer (62) of elastomeric compound that is radially further towards the inside is made up of a second elastomeric compound, **in that** at least one third layer (63) of elastomeric compound that is radially in contact with two layers made up of said first elastomeric compound and/or said second elastomeric compound is made up of a third elastomeric compound having a Vickers hardness, measured with a microhardness measuring system according to the conditions defined in the description, at least 12 times greater than that of the first elastomeric compound and at least 12 times greater than that of the second elastomeric compound, **in that,** in a meridian section of the tyre, in a defined region between the axially outermost ends of the third layer, the ratio of the area of the third elastomeric compound to the sum of the areas of said at least three layers of elastomeric compound is between 10% and 30%, and **in that,** in a meridian section of the tyre, the barycentre of the third elastomeric compound is situated radially between 30% and 70% of the tread pattern height of the tread from the bottom of the tread pattern.

2. - Tyre (1) according to Claim 1, **characterized in that** the third layer of polymeric compound is present over at least 40% of the axial width of the tread.

3. - Tyre (1) according to Claim 1 or 2, **characterized in that** the third elastomeric compound has a Vickers hardness, measured with a microhardness measuring system according to the conditions defined in the description, of greater than 72 MPa.

4. - Tyre (1) according to one of Claims 1 to 3, **characterized in that** the third elastomeric compound has a complex dynamic shear modulus G*, measured according to Standard ASTM D 5992-96, at a frequency of 10 Hz, at a temperature of 60°C, at 5% elongation, at least 5 times greater than that of the first elastomeric compound and at least 5 times greater than that of the second elastomeric compound.

5. - Tyre (1) according to one of the preceding claims, **characterized in that** the third elastomeric compound has a complex dynamic shear modulus G*, measured according to Standard ASTM D 5992-96, at a frequency of 10 Hz, at a temperature of 60°C, of greater than 30 MPa at 5% elongation.

6. - Tyre (1) according to one of the preceding claims, **characterized in that** the third elastomeric compound has a maximum value of tan(δ), denoted tan(δ)max, of strictly greater than 0.150 and preferably greater than 0.200.

7. - Tyre (1) according to one of the preceding claims, **characterized in that** the second elastomeric compound is identical to the first elastomeric compound.

8. - Tyre (1) according to one of the preceding claims, **characterized in that** the ratio of the area of the third elastomeric compound to the sum of the areas of said at least three layers of elastomeric compound is greater than 15% and preferably less than 25%.

9. - Tyre (1) according to one of the preceding claims, **characterized in that,** in a meridian section of the tyre, said at least one third layer is disposed substantially parallel to the outer surface of the tread.

10. - Tyre (1) according to one of Claims 1 to 8, **characterized in that,** in a meridian section of the tyre, the radial positioning of said at least one third layer varies along the axial direction.
